# EUROPÄISCHE PATENTANMELDUNG

(11) **EP 2 287 656 A1**
(43) Veröffentlichungstag der Anmeldung: **23.02.2011**
(21) Anmeldenummer: 10008560.4
(22) Anmeldetag: 17.08.2010
(51) Int. Cl.: G02C 7/04

(54) **Verfahren zur Herstellung von an die Augen einer Person angepassten Kontaktlinsen**

(30) Priorität: 17.08.2009 DE 102009037550
(71) Anmelder: Hecht Contactlinsen GmbH, 79280 Au (DE)
(72) Erfinder: Muckenhirn, Dieter, 79299 Wittnau (DE); Muckenhirn, Stefan, 79280 Au (DE)
(74) Vertreter: Geitz Truckenmüller Lucht

(57) **Zusammenfassung**

Es wird ein Verfahren zur Herstellung von an die Augen einer Person angepassten Kontaktlinsen vorgeschlagen mit folgenden Verfahrensschritten: Vorgabe der Topografie der Hornhaut des Auges, Vorgabe der Fehlsichtigkeit der Augen, Bestimmung der Geometrie der Rückseite einer ersten Kontaktlinse (10) aus den Daten betreffend die Topografie der Hornhaut des Auges, Bestimmung der Geometrie der Vorderseite und/ oder der Rückseite der ersten Kontaktlinse (10) zur Erzielung einer Korrektur der Fehlsichtigkeit, Anfertigen der ersten Kontaktlinse (10) mit einer Rückseite und einer Vorderseite entsprechend den ermittelten Daten, Aufsetzen der ersten Kontaktlinse (10) auf das Auge (9) der Person und Überprüfung des Systems von Auge und Kontaktlinse auf Abbildungsfehler, Bestimmung einer geänderten Geometrie der Vorderseite (6) der Kontaktlinse zur Eliminierung mindestens eines Abbildungsfehlers des Systems aus Auge und Kontaktlinse, Anfertigen einer zweiten Kontaktlinse (1) unter Berücksichtigung der vor der Anfertigung der ersten Kontaktlinse (10) ermittelten Geometrie der Rückseite (7) und der nach dem Aufsetzen der ersten Kontaktlinse geänderten Geometrie der Vorderseite (6).

## Beschreibung

Die Erfindung geht aus von einem Verfahren zur Herstellung von an die Augen einer Person angepassten Kontaktlinsen, bei dem die Geometrie der Rückseite der Kontaktlinse auf die Topografie der Hornhaut des Auges abgestimmt wird.

Personen, deren Hornhaut eine unregelmäßige, von der Norm abweichende Topografie aufweist, benötigen zur Korrektur einer Fehlsichtigkeit mittels Kontaktlinsen speziell geformte Kontaktlinsen. Eine Deformation der Hornhaut tritt beispielsweise bei Keratokonus, Transplantaten, Verletzungen der Hornhaut oder nach Augenoperationen auf. Herkömmliche, standardisierte Kontaktlinsen sind bei einer Deformation der Hornhaut entweder unverträglich oder führen nicht zu der gewünschten Sehkorrektur. Die unregelmäßig geformte Hornhaut kann dabei ebenfalls zu einer verminderten Sehqualität beitragen. Daher müssen bei derartigen Personen die Kontaktlinsen an die Topografie der Hornhaut angepasst werden. Hierzu wird die Topografie der Augenoberfläche dreidimensional gemessen. Aus den dabei gewonnen Daten wird die Geometrie der im eingesetzten Zustand dem Auge zugewandten Rückseite der Kontaktlinse berechnet. Die Geometrie der der Rückseite abgewandten Vorderseite der Kontaktlinse hängt von der zu erzielenden Sehkorrektur und dem Linsenmaterial ab. Unter Verwendung der berechneten Daten der Geometrie der Vorder- und Rückseite werden die speziell an den Kunden angepassten Kontaktlinsen hergestellt. Hierzu dienen beispielsweise spanabhebende Verfahren unter Einsatz von Drehtechnik, Ätztechnik oder Laserablation, Gießform-Verfahren oder Thermoformverfahren. Als nachteilig erweist sich, dass mit den derart hergestellten Kontaktlinsen im eingesetzten Zustand dennoch teilweise die gewünschte Sehkorrektur nicht erzielt wird. Dies kann beispielsweise daran liegen, dass sich die Unregelmäßigkeiten der Hornhaut auf die Linse übertragen oder dass sich die Kontaktlinse auf dem Auge verschiebt oder rotiert. Überschreitet diese Bewegung bestimmte vorgegebene Grenzen, ist eine Sehkorrektur mit den betreffenden Kontaktlinsen nicht möglich. Darüber hinaus können bei dem System aus Auge und Kontaktlinse Abbildungsfehler auftreten, die bei der Feststellung der Sehschwäche nicht berücksichtigt wurden. Bei der Diagnose der Fehlsichtigkeit werden in der Regel nur sphärische Abbildungsfehler, wie Myopie oder Hyperopie, und zylindrische Abbildungsfehler, wie Astigmatismus berücksichtigt. Neben den genannten Abbildungsfehlern können jedoch noch weitere Abbildungsfehler auftreten, die das Auflösungsvermögen begrenzen. Wird beim Einsatz der Kontaktlinse festgestellt, dass die Sehkorrektur unzureichend ist, kann eine Nachbearbeitung insbesondere von Kontaktlinsen aus weichem Linsenmaterial nicht stattfinden. Die hydratisierten Kontaktlinsen können aufgrund ihrer Konsistenz weder fixiert noch bearbeitet werden, ohne sie dabei zu beschädigen.

Der Erfindung liegt die Aufgabe zugrunde, ein Verfahren zur Herstellung von an die Augen einer Person angepassten Kontaktlinsen zur Verfügung zu stellen, das zu Kontaktlinsen führt, die eine für die Behebung der Fehlsichtigkeit notwendige und optimierte Sehkorrektur garantieren.

Diese Aufgabe wird durch ein Verfahren mit den Merkmalen des Anspruchs 1 gelöst. Gemäß dem erfindungsgemäßen Verfahren wird zunächst die Topografie der Hornhaut bestimmt. Aus der vorgegebenen Topografie der Hornhaut wird die Geometrie der Rückseite der Kontaktlinse bestimmt. Dabei wird eine Anpasscharakteristik mit vorgegebenen Anpasskriterien berücksichtigt. So ist beispielsweise die Anpassung der Rückseite der Kontaktlinse an die Hornhaut des Auges am Rand der Kontaktlinse anders als im Zentrum der Kontaktlinse. Ferner wird die Geometrie der Vorderseite der Kontaktlinse unter Berücksichtigung der gewünschten Sehkorrektur zur Vermeidung der bei der Person festgestellten Fehlsichtigkeit bestimmt. Sofern die Geometrie der Rückseite auch zu einer Sehkorrektur führt, kann dies ebenfalls bei der Bestimmung der Geometrie der Rückseite berücksichtigt werden. In die Bestimmung der Geometrie kann der optische Einfluss einer Schicht aus Tränenflüssigkeit eingehen, die sich bei der auf das Auge aufgesetzten Kontaktlinse zwischen der Rückseite der Kontaktlinse und der Hornhaut ausbildet. Schließlich wird eine erste Kontaktlinse angefertigt mit einer Rückseite und einer Vorderseite entsprechend den ermittelten Daten. Diese erste Kontaktlinse wird auf das Auge der Person aufgesetzt. Anschließend wird das System aus Auge und Kontaktlinse auf die verbliebenen Abbildungsfehler überprüft. Dies erfolgt beispielsweise mittels einer refraktiven Messung. Werden Abbildungsfehler festgestellt, so wird eine geänderte, kompensierende Geometrie der Vorderseite der Kontaktlinse berechnet um den oder die festgestellten Abbildungsfehler zu eliminieren. Anschließend wird eine zweite Kontaktlinse aus demselben Linsenmaterial wie die erste Kontaktlinse und mit derselben Geometrie der Rückseite wie die erste Kontaktlinse hergestellt. Die Geometrie der Vorderseite wird entsprechend der berechneten Korrektur geändert.

Wird bei der Überprüfung des Systems aus Auge und erster Kontaktlinse kein Abbildungsfehler festgestellt, so ist eine Änderung der Geometrie der Vorderseite der Kontaktlinse nicht notwendig. In diesem Fall kann die Herstellung einer zweiten Kontaktlinse unterbleiben. Die Person kann die erste Kontaktlinse tragen, sofern diese alle Kriterien für eine im Einsatz befindliche Kontaktlinse erfüllt. Genügt die erste Kontaktlinse jedoch nicht um die Fehlsichtigkeit zu kompensieren, so dient die erste Kontaktlinse nur zur Messung und Überprüfung des Abbildungsfehlers. In diesem Fall kann sie auch als Messlinse bezeichnet werden. Sie wird nach der Bestimmung der Abbildungsfehler des Systems aus Auge und erster Kontaktlinse nicht weiter verwendet.

Das erfindungsgemäße Verfahren zeichnet sich dadurch aus, dass sowohl eine Anpassung an die Topografie der Hornhaut als auch eine Kompensierung der Fehlsichtigkeit erfolgt. Dabei werden nicht nur die in einer Untersuchung vor der Herstellung der Kontaktlinse festgestellten sphärischen und zylindrischen Abbildungsfehler berücksichtigt sondern auch der Sitz und die Ausrichtung der Kontaktlinse auf dem Auge und eventuelle weitere Abbildungsfehler. Bei letzteren handelt es sich insbesondere um Abbildungsfehler höherer Ordnung. Da die Kontaktlinse an die Topografie der Hornhaut angepasst ist, findet eine Verschiebung und eine Rotation auf dem Auge in wesentlich geringerem Umfang statt als bei standardisierten Kontaktlinsen. Zur weiteren Verbesserung des Sitzes der Kontaktlinse kann an der Rückseite eine reverse Rückoptikzone vorgesehen sein. Sie ist ringförmig oder oval und konzentrisch oder exzentrisch zum Mittelpunkt der Rückseite der Kontaktlinse angeordnet. Die verminderte Bewegungsdynamik der Kontaktlinse auf dem Auge sorgt für einen optimalen Sitz und die Verbesserung der optischen Eigenschaften. Dabei ist es wesentlich, dass die Topografie der Hornhaut bereits bei der ersten Kontaktlinse berücksichtigt wird und die Rückseite der ersten Kontaktlinse an die Topografie der Hornhaut angepasst ist. Dies führt dazu, dass die erste Kontaktlinse bereits eine bestmögliche Sehkorrektur und einen bestmöglichen Sitz aufweist. Bei der zweiten Kontaktlinse werden lediglich kleinere Korrekturen vorgenommen um die Abbildungsqualität des Systems aus Auge und Kontaktlinse zu optimieren.

Die als Verfahrensprodukt vorliegende zweite Kontaktlinse ist hinsichtlich der Rückseite und der Vorderseite optimal an die Person angepasst. Auf diese Weise wird sowohl die Topografie der Hornhaut berücksichtigt als auch die Fehlsichtigkeit durch die Eliminierung der Abbildungsfehler bei dem System aus Auge und Kontaktlinse behoben.

Sowohl die Herstellung der ersten Kontaktlinse als auch die Herstellung der zweiten Kontaktlinse erfolgt bevorzugt durch ein spanabhebendes Verfahren unter Verwendung eines Rohlings aus einem harten oder weichen Kontaktlinsenmaterial. Dieser Rohling weist eine Zylinderform auf. Spanabhebende Verfahren haben gegenüber anderen Verfahren, insbesondere gegenüber der Laserablation, den Vorteil, dass mit Ihnen eine glatte Oberfläche erzeugt werden kann. Diese glatten Oberflächen zeichnen sich gegenüber den mittels Laserablation erzeugten zerklüfteten Oberflächen dadurch aus, dass sie eine wesentlich geringere Neigung zur Ablagerung von Proteinen und sonstigen Verunreinigungen zeigen.

Grundsätzlich kann das Verfahren bei der Herstellung von harten und weichen Kontaktlinsen zum Einsatz kommen. Bei weichen Linsenmaterialien eignet sich insbesondere ein Silikon-Hydrogel-Material, da es die ausreichende Versorgung des Auges und eventueller Transplantate im Auge mit Sauerstoff gewährleistet.

Nach einer vorteilhaften Ausgestaltung der Erfindung wird zur Überprüfung des Systems von Auge und Kontaktlinse auf eine Sehbeeinträchtigung die Position der ersten Kontaktlinse auf dem Auge messtechnisch erfasst und ausgewertet. Nur wenn sich die Kontaktlinse beim Aufsetzen auf das Auge in der vorgeplanten Lage exakt positioniert, hat die Kontaktlinse die gewünschte optische Wirkung. Eine dezentrale Positionierung der Kontaktlinse auf dem Auge führt zu einer prismatischen Wirkung. Diese hat eine Verschiebung des wahrgenommenen Bildes zur Folge. Es entstehen damit durch die dezentrale Position der Kontaktlinse neue Abbildungsfehler, die stärker als die zu korrigierende Fehlsichtigkeit sein können. In diesem Fall ist eine Korrektur der Kontaktlinse notwendig. Eine derartige Korrektur kann jedoch nicht durch eine Änderung der Vorderseite der Kontaktlinse erreicht werden. In diesem Fall ist die Geometrie der Rückseite der Kontaktlinse zu ändern. Ergibt die Überprüfung jedoch, dass die erste Kontaktlinse einen guten Sitz auf dem Auge aufweist, so wird die Geometrie der Rückseite bei der zweiten Kontaktlinse übernommen, um an der Bewegungsdynamik der Kontaktlinse nichts zu ändern.

Nach einer weiteren vorteilhaften Ausgestaltung der Erfindung wird zur Überprüfung des Systems von Auge und Kontaktlinse auf eine Sehbeeinträchtigung die Translation und/ oder die Rotation der ersten Kontaktlinse auf dem Auge messtechnisch erfasst und ausgewertet. Eine Rotation oder Translation der Kontaktlinse während des Tragens kann auch dann auftreten, wenn sich die Kontaktlinse beim Aufsetzen exakt positioniert. Die Rotation oder Translation kann durch eine Bewegung des Auges ausgelöst werden. Eine Bewegung der Kontaktlinse innerhalb enger Grenzen ist unkritisch. Werden bei einer Bewegung der Kontaktlinse die vorgegebenen Grenzen jedoch überschritten, so treten Abbildungsfehler, wie beispielsweise eine Verschiebung des Bildes aufgrund einer prismatischen Wirkung, Koma und sonstige auf. Ferner können bei einer Rotation der Kontaktlinse Abbildungsfehler, die nicht rotationssymmetrisch sind, nicht mehr kompensiert werden. In diesem Fall ist eine Korrektur der Kontaktlinse notwendig um eine Optimierung des Linsensitzes im Auge zu erreichen. Es gilt entsprechendes wie im obigen Abschnitt betreffend die Zentrierung der Kontaktlinse.

Nach einer weiteren vorteilhaften Ausgestaltung der Erfindung wird zur Überprüfung des Systems von Auge und Kontaktlinse auf eine Sehbeeinträchtigung die sphärische und/ oder zylindrische Fehlsichtigkeit messtechnisch bestimmt. Dies erfolgt beispielsweise durch eine refraktive Messung des Systems auf Auge und Kontaktlinse.

Nach einer weiteren vorteilhaften Ausgestaltung der Erfindung wird zusätzlich zu der Topografie der Hornhaut die Topografie der angrenzenden Sklera vorgegeben. Die Geometrie der Rückseite der ersten Kontaktlinse und der zweiten Kontaktlinse wird aus den Daten betreffend die Topografie der Hornhaut und der angrenzenden Sklera des Auges bestimmt. Die Linse liegt beim Tragen nicht nur auf der Hornhaut des Auges sondern auch auf der an die Hornhaut angrenzende Sklera auf. Dieser Auflagebereich der Linse auf der Sklera bildet einen Ring um die Hornhaut. Er resultiert daraus, dass der Radius der Linse größer ist als der Radius der Hornhaut. Der Sitz der Linse auf dem Auge kann dadurch verbessert werden, dass auch die Topografie des Bereichs der Sklera, auf dem die Linse aufliegt, bei der Herstellung der Linse berücksichtigt wird. Zur Erfassung der Topografie der Sklera eignen sich beispielsweise das Scheimpflug-Verfahren, bei dem ein Lichtstreifen auf das Auge projiziert und der Lichtstreifen gedreht wird, sowie ein Gitter-Verfahren, bei dem ein sich nicht bewegendes Gitter aus Lichtstreifen auf das Auge projiziert wird. In beiden Fällen ergibt sich die Topografie des Auges aus dem Versatz der Lichtstreifen an der Augenoberfläche.

Nach einer weiteren vorteilhaften Ausgestaltung der Erfindung werden bei der Bestimmung der Geometrie der Vorderseite und/ oder der Rückseite der Kontaktlinse zur Erzielung einer Korrektur der Fehlsichtigkeit vor der Anfertigung der ersten Kontaktlinse ausschließlich Abbildungsfehler erster Ordnung berücksichtigt. Hierzu zählen Myopie, Hyperopie und Astigmatismus.

Nach einer weiteren vorteilhaften Ausgestaltung der Erfindung werden bei der Bestimmung einer geänderten Geometrie der Vorderseite der Kontaktlinse zur Eliminierung mindestens eines Abbildungsfehlers des Systems aus Auge und Kontaktlinse nach dem Aufsetzen der ersten Kontaktlinse auf das Auge Abbildungsfehler höherer Ordnung berücksichtigt. Hierbei kann eine Auswahl getroffen werden, welche der Abbildungsfehler höherer Ordnung korrigiert werden um eine gewünschte Sehkorrektur zu erzielen. Manche der Abbildungsfehler höherer Ordnung haben auf das Sehempfinden eine derart geringe oder vernachlässigbare Auswirkung, dass eine Korrektur nicht notwendig ist.

Nach einer weiteren vorteilhaften Ausgestaltung der Erfindung handelt es sich bei den bei der Herstellung der ersten Linse berücksichtigten Abbildungsfehlern niederer Ordnung um Zernike-Polynome mit Z 0, 1 oder 2. Ferner handelt es bei den bei der Herstellung der zweiten Linse berücksichtigten Abbildungsfehlern höherer Ordnung um Zernike-Polynome mit Z 3 oder Z größer 3. Damit werden bei der Herstellung der ersten Linse lediglich Aberrationen wie Höhenkonstanste und mittlere Höhe der Fläche (Z 0,0), Verkippung (Z 1, ± 1), Defokus (Z 2, 0) und Astigmatismus (Z 2, ± 2) korrigiert. Bei der Herstellung der zweiten Linse werden dagegen zusätzlich Aberationen höherer Ordnung wie bespielsweise Koma (Z 3, ±1), Dreiwelligkeit (Z 3, ±3), sphärische Aberration (Z 4, 0) und Astigmatismus vierter Ordnung (Z 4, ±2) berücksichtigt um einen Abbildungsfehler des Systems aus erster Linse und Auge zu korrigieren.

Nach einer weiteren vorteilhaften Ausgestaltung der Erfindung wird zur Überprüfung des Systems von Auge und Kontaktlinse auf eine Sehbeeinträchtigung eine Wellenfront-Messung durchgeführt. Dabei werden beispielsweise parallele Lichtstrahlen erzeugt. Die Lichtstrahlen durchlaufen eine Sammellinse, eine so genannte Aberroskoplinse. Bei einem emmetropen Auge werden die Lichtstrahlen durch die Sammellinse in einem bestimmten Abstand vor der Retina fokussiert. Die sich dabei ergebenden Lichtpunkte auf der Retina sind als Muster beobachtbar. Bei einem aberrationsfreien idealen System aus Auge und Kontaktlinse ist das abgebildete Lichtpunktmuster unverzerrt und entspricht dem durch die Erzeugung der Lichtstrahlen vorgegebenen Muster. Bei einem System Auge-Kontaktlinse mit Abbildungsfehlern kommt es zu einer Verschiebung der einzelnen Musterpunkte und damit zu einem verzerrten Lichtpunktmuster. Dies folgt aus der unterschiedlichen optischen Wirkung der verschiedenen Hornhaut- und Pupillenbereiche auf die einzelnen Lichtstrahlen. Wellenfronten breiten sich bei einem System mit Aberrationen nicht homogen und gleichmäßig aus. Eine ebene oder kugelförmige Wellenfront, auf der die Phase identisch ist, erfährt in dem System eine Deformation, die durch die unterschiedliche optische Wirkung der einzelnen Bereiche des Systems bedingt ist.

Anstelle eines auf der Retina abgebildeten Lichtpunktmusters können auch die von dem System aus Auge und erster Kontaktlinse reflektierten Wellenfronten detekiert und ausgewertet werden. Die einfallenden und die reflektierten Wellenfronten erfahren eine Deformation entsprechend der optischen Wirkung von Auge und Kontaktlinse.

Die Messung der Wellenfronten kann beispielsweise mit einem Hartmann-Shack-Sensor erfolgen. Die Deformation der Wellenfront kann als mathematische Funktion des Ortes dargestellt werden. Als Approximation eignen sich beispielsweise Summen von Zernicke-Polynomen. Diese haben den Vorteil, dass ihre Koeffizienten einen direkten Bezug zu den allgemein bekannten Abbildungsfehlern, wie beispielsweise Koma, Astigmatismus, Öffnungsfehler oder Verzeichnung haben. Polynome höherer Ordnung entsprechen so genannten Seidel-Aberrationen. In einer Beschreibung der Abbildungseigenschaften des Auges oder des System aus Auge und Kontaktlinse können die einzelnen Abbildungsfehler in Fehler verschiedener Ordnung klassifiziert werden. Es kann eine Auswahl getroffen werden, welche der Fehler mit der endgültigen Kontaktlinse korrigiert werden.

Um die durch das System aus Auge und erster Kontaktlinse deformierte Wellenfront in eine ideale Wellenfront zu verwandeln, wird die Geometrie der Vorderseite der Kontaktlinse geändert. Die Änderung kann aus der Deformation der Wellenfront berechnet werden. Dadurch ergibt sich ein Ablationsprofil oder Abtragsprofil für die Herstellung der zweiten Kontaktlinse. Die Daten können in ein Höhenmodell mit Stützpunktkoordinaten transformiert werden.

Nach einer weiteren vorteilhaften Ausgestaltung der Erfindung wird auf der Vorderseite der Kontaktlinse eine Korrekturzone festgelegt. Die Änderung der Geometrie der Vorderseite der Kontaktlinse erfolgt bei der zweiten Kontaktlinse ausschließlich in dieser Korrekturzone. Diese ist bevorzugt rund und konzentrisch zur Kontaktlinse definiert. Der Durchmesser der Korrekturzone kann an den Einzelfall angepasst werden. Um einen gleichmäßigen Randbereich der Kontaktlinse zu gewährleisten, schließt sich bevorzugt an die Korrekturzone eine Übergangszone an. Sie garantiert einen gleichmäßigen Übergang zum Rand der Kontaktlinse.

Nach einer weiteren vorteilhaften Ausgestaltung der Erfindung wird aus der Geometrie der Rückseite und der geänderten Geometrie der Vorderseite ein Abtragsprofil für einen Kontaktlinsen-Rohling berechnet.

Nach einer weiteren vorteilhaften Ausgestaltung der Erfindung erfolgt die Anfertigung der ersten und/ oder der zweiten Kontaktlinse durch ein spanabhebendes Verfahren. Diese haben den Vorteil, dass sich mit Ihnen eine hinreichend glatte Oberfläche erzeugen lässt. Glatte Oberflächen zeichnen sich dadurch aus, dass sie eine wesentlich geringere Neigung zur Ablagerung von Proteinen und Verunreinigungen aufweisen als zerklüftete Oberflächen. Spanabhebende Verfahren sind insbesondere in Kombination mit kreisrunden Korrekturzonen von Vorteil.

Weitere Vorteile und vorteilhafte Ausgestaltungen der Erfindung sind der nachfolgenden Beschreibung, der Zeichnung und den Ansprüchen zu entnehmen.

### Zeichnung

In der Zeichnung ist ein Ausführungsbeispiel der Erfindung dargestellt. Es zeigen:
- Figur 1: Aufsicht auf eine zweite Kontaktlinse,
- Figur 2: Kontaktlinse gemäß Figur 1 in einer Seitenansicht,
- Figur 3: schematische Darstellung der Wellenfront-Messung des Systems aus Auge und erster Kontaktlinse.

### Beschreibung des Ausführungsbeispiels

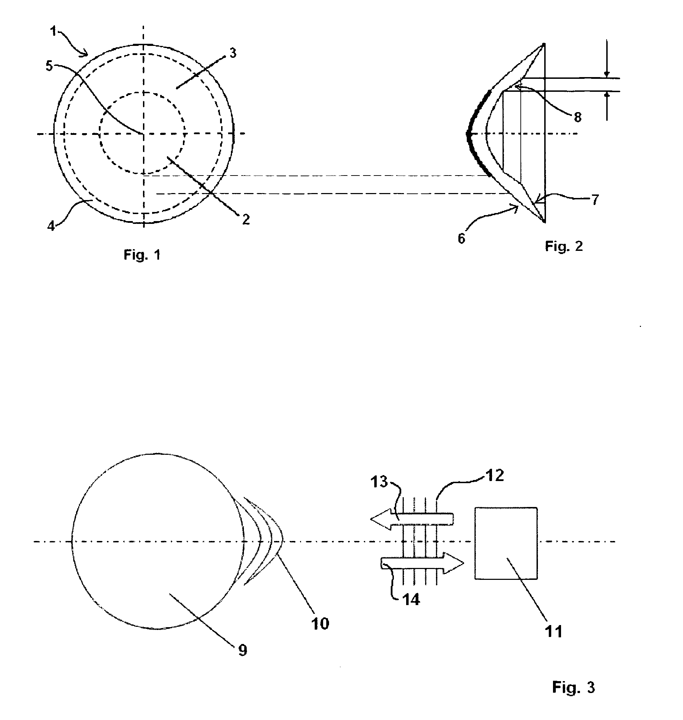

In den Figuren 1 und 2 ist eine zweite Kontaktlinse 1 mit einer Korrekturzone 2, einer Übergangszone 3 und einem Rand 4 dargestellt. Kontaktlinse 1, Korrekturzone 2 und Übergangszone 3 sind kreisrund. Korrekturzone 2 und Übergangszone 3 sind konzentrisch bezüglich des Mittelpunktes 5 der Kontaktlinse angeordnet. In Figur 2 ist die Korrekturzone zur Verdeutlichung durch eine dicke Linie dargestellt. In der Darstellung gemäß Figur 2 sind die Vorderseite 6 und die Rückseite 7 der Kontaktlinse 1 erkennbar. Auf der Rückseite befindet sich eine reverse Zone 8. Sie dient einer Optimierung des Linsensitzes bei einem Auge mit Transplantat. Die reverse Zone 8 ist rund und ebenfalls konzentrisch zum Mittelpunkt 5 der Kontaktlinse angeordnet.

Figur 3 zeigt schematisch die Durchführung einer Wellenfront-Messung an einem System aus einem Auge 9 und einer ersten Kontaktlinse 10 als Messlinse. Ein Wellenfrontsensor 11 erzeugt Licht, das sich als ebene Wellenfronten 12 ausbreitet. Mehrere Wellenfronten sind als parallele Striche dargestellt. Die Ausbreitungsrichtung 13 des Lichts ist als Pfeil dargestellt. Das durch das System aus Auge 9 und erster Kontaktlinse 10 reflektierte Licht wird durch den Wellensensor 11 erfasst und ausgewertet. Die Ausbreitungsrichtung 14 des reflektierten Lichts ist ebenfalls als Pfeil dargestellt. Der Wellenfrontsensor 11 stellt die Aberrationen der durch das System aus Auge 9 und Kontaktlinse 10 reflektierten Wellenfronten fest.

Sämtliche Merkmale der Erfindung können sowohl einzeln als auch in beliebiger Kombination miteinander erfindungswesentlich sein.

Bezugszahlen
- 1: zweite Kontaktlinse
- 2: Korrekturzone
- 3: Übergangszone
- 4: Rand
- 5: Mittelpunkt der Vorderseite Kontaktlinse
- 6: Vorderseite der zweiten Kontaktlinse
- 7: Rückseite der zweiten Kontaktlinse
- 8: reverse Zone
- 9: Auge
- 10: erste Kontaktlinse
- 11: Wellenfrontsensor
- 12: Wellenfront
- 13: Ausbreitungsrichtung der durch den Wellefrontsensor emittierten Wellenfronten
- 14: Ausbreitungsrichtung der durch Auge und Kontaktlinse reflektierten Wellenfronten

## Patentansprüche

1. Verfahren zur Herstellung von an die Augen einer Person angepassten Kontaktlinsen **gekennzeichnet durch** folgende Verfahrensschritte:
Vorgabe der Topografie der Hornhaut des Auges,
Vorgabe der Fehlsichtigkeit der Augen,
Bestimmung der Geometrie der Rückseite einer ersten Kontaktlinse (10) aus den Daten betreffend die Topografie der Hornhaut des Auges,
Bestimmung der Geometrie der Vorderseite und/ oder der Rückseite der ersten Kontaktlinse (10) zur Erzielung einer Korrektur der Fehlsichtigkeit,
Anfertigen der ersten Kontaktlinse (10) mit einer Rückseite und einer Vorderseite entsprechend den ermittelten Daten,
Aufsetzen der ersten Kontaktlinse (10) auf das Auge (9) der Person und
Überprüfung des Systems von Auge und Kontaktlinse auf Abbildungsfehler,
Bestimmung einer geänderten Geometrie der Vorderseite (6) der Kontaktlinse zur Eliminierung mindestens eines Abbildungsfehlers des Systems aus Auge und Kontaktlinse,
Anfertigen einer zweiten Kontaktlinse (1) unter Berücksichtigung der vor der Anfertigung der ersten Kontaktlinse (10) ermittelten Geometrie der Rückseite (7) und der nach dem Aufsetzen der ersten Kontaktlinse geänderten Geometrie der Vorderseite (6).

2. Verfahren nach Anspruch 1, **dadurch gekennzeichnet, dass** zur Überprüfung des Systems von Auge (9) und erster Kontaktlinse (10) auf Abbildungsfehler die Position der ersten Kontaktlinse (10) auf dem Auge (9) messtechnisch erfasst und ausgewertet wird.

3. Verfahren nach Anspruch 1 oder 2, **dadurch gekennzeichnet, dass** zur Überprüfung des Systems von Auge (9) und erster Kontaktlinse (10) auf Abbildungsfehler die Translation und/ oder die Rotation der ersten Kontaktlinse (10) auf dem Auge (9) messtechnisch erfasst und ausgewertet wird.

4. Verfahren nach Anspruch 1, 2 oder 3, **dadurch gekennzeichnet, dass** zur Überprüfung des Systems von Auge (9) und erster Kontaktlinse (10) auf Abbildungsfehler die sphärische und/ oder zylindrische Fehlsichtigkeit messtechnisch bestimmt wird.

5. Verfahren nach einem der vorhergehenden Ansprüche, **dadurch gekennzeichnet, dass** zusätzlich zu der Topografie der Hornhaut die Topografie der angrenzenden Sklera vorgegeben wird, und dass die Geometrie der Rückseite der ersten Kontaktlinse (10) und der zweiten Kontaktlinse aus den Daten betreffend die Topografie der Hornhaut und der angrenzenden Sklera des Auges bestimmt wird.

6. Verfahren nach einem der vorhergehenden Ansprüche, **dadurch gekennzeichnet, dass** bei der Bestimmung der Geometrie der Vorderseite und/ oder der Rückseite der Kontaktlinse zur Erzielung einer Korrektur der Fehlsichtigkeit vor der Anfertigung der ersten Kontaktlinse (10) ausschließlich Abbildungsfehler erster Ordnung berücksichtigt werden.

7. Verfahren nach Anspruch 6, **dadurch gekennzeichnet, dass** bei der Bestimmung einer geänderten Geometrie der Vorderseite der zweiten Kontaktlinse (1) zur Eliminierung mindestens eines Abbildungsfehlers des Systems aus Auge (9) und erster Kontaktlinse (10) nach dem Aufsetzen der ersten Kontaktlinse (10) auf das Auge (9) Abbildungsfehler höherer Ordnung berücksichtigt werden.

8. Verfahren nach einem der vorhergehenden Ansprüche, **dadurch gekennzeichnet, dass** bei der Bestimmung der Geometrie der Vorderseite und/ oder der Rückseite der ersten Kontaktlinse zur Erzielung einer Korrektur der Fehlsichtigkeit nur Aberrationen niederer Ordnung mit Z=0, 1 oder 2 der zugehörigen Zernike-Polynome berücksichtigt werden, und dass bei der Bestimmung einer geänderten Geometrie der Vorderseite der Kontaktlinse (1) zur Eliminierung mindestens eines Abbildungsfehlers des Systems aus Auge (9) und erster Kontaktlinse (10) zusätzlich Aberrationen höherer Ordnung mit Z=3 oder Z größer 3 der zugehörigen Zernike-Polynome berücksichtigt werden.

9. Verfahren nach einem der vorhergehenden Ansprüche, **dadurch gekennzeichnet, dass** zur Überprüfung des Systems von Auge (9) und erster Kontaktlinse (10) auf Abbildungsfehler eine Wellenfront-Messung durchgeführt wird.

10. Verfahren nach einem der vorhergehenden Ansprüche, **dadurch gekennzeichnet, dass** auf der Vorderseite der Kontaktlinse eine Korrekturzone (2) festgelegt wird, und dass die Änderung der Geometrie der Vorderseite (6) bei der zweiten Kontaktlinse (1) ausschließlich in dieser Korrekturzone (2) vorgenommen wird.

11. Verfahren nach Anspruch 10, **dadurch gekennzeichnet, dass** die Korrekturzone (2) durch eine Übergangszone (3) vom Rand (4) der Kontaktlinse (1) getrennt festgelegt wird.

12. Verfahren nach Anspruch 10 oder 11, **dadurch gekennzeichnet, dass** die Korrekturzone (2) kreisförmig oder oval ist und mit ihrem Zentrum konzentrisch zur Kontaktlinse (1) festgelegt wird.

13. Verfahren nach einem der vorhergehenden Ansprüche, **dadurch gekennzeichnet, dass** aus der Geometrie der Rückseite (7) und der geänderten Geometrie der Vorderseite (6) ein Abtragsprofil für einen Kontaktlinsen-Rohling berechnet wird.

14. Verfahren nach einem der vorhergehenden Ansprüche, **dadurch gekennzeichnet, dass** die Anfertigung der ersten und/ oder der zweiten Kontaktlinse (1, 10) durch ein spanabhebendes Verfahren erfolgt.

15. Verfahren nach einem der vorhergehenden Ansprüche, **dadurch gekennzeichnet, dass** die zur Anfertigung der ersten und der zweiten Kontaktlinse (1, 10) ein weiches Kontaktlinsenmaterial, insbesondere ein Silikon-Hydrogel-Material verwendet wird.
